# EUROPÄISCHE PATENTANMELDUNG

(11) **EP 4 793 018 A1**
(43) Veröffentlichungstag der Anmeldung: **19.08.2026**
(21) Anmeldenummer: 26156757.2
(22) Anmeldetag: 05.02.2026
(51) Int. Cl.: B29C 45/27, B29C 45/73, B29C 45/78, B29C 45/72

(54) **SPRITZGIESSVORRICHTUNG MIT MIKROWELLEN-VORWÄRMUNG UND NACHGESCHALTETER ANGUSSVERTEILUNG UND SPRITZGIESSVERFAHREN MIT MIKROWELLEN-VORWÄRMUNG**

(30) Priorität: 12.02.2025 DE 102025105264
(71) Anmelder: Stefan Pfaff Werkzeug- und Formenbau GmbH Co KG, 88167 Röthenbach im Allgäu (DE); Gerlach Maschinenbau GmbH, 41334 Nettetal (DE)
(72) Erfinder: Brühl, Maximilian, 88167 Grünenbach (DE); Drach, Michael, 52525 Heinsberg (DE); Möckel, Jens, 41334 Nettetal (DE)
(74) Vertreter: RavensPAT Patentanwälte Partnerschaft mbB

(57) **Zusammenfassung**

Vorgeschlagen wird eine effiziente Spritzgießvorrichtung (1) für einen Spritzgießprozess und zur Vernetzung, umfassend: eine Form (2) mit einer oberen (3) und unteren Formplatte (4) zur Kavitätsbildung (5) , ein Anspritzaggregat (19), einen Mikrowellenerhitzer (10) zum Vorwärmen mit einem Mikrowellengenerator (17) und einem Hohlleiter (9) für die Mikrowellen, wobei eine Durchflussbuchse (12) im Hohlleiter (9) angeordnet ist und der Werkstoff aus dem Anspritzaggregat (19) durch die Durchflussbuchse (12) und somit durch den Hohlleiter (9) hindurchfließen kann. Sie zeichnet sich aus durch einen Angussverteiler (7), welcher an die Durchflussbuchse (12) angeschlossen ist, sodass der Angussverteiler (7) von der Durchflussbuchse (12) mit dem Werkstoff gespeist wird, und eine Kontrollvorrichtung (18), um den Werkstoff vor dem Einspritzen auf eine Temperatur unterhalb der Formtemperatur zu erwärmen.

## Beschreibung

Die Erfindung betrifft eine Spritzgießvorrichtung zur Durchführung eines Spritzgießprozesses mit einem Kautschuk als Werkstoff und zum Bewirken einer Vernetzung bzw. Vulkanisierung zur Herstellung eines elastomeren Kunststoffs durch Erwärmung nach dem Oberbegriff des Anspruchs 1 sowie ein Spritzgießverfahren nach dem Oberbegriff des Anspruchs 12.

Aus dem Stand der Technik ist aus der FR 2 617 754 A1 ein Verfahren zur Herstellung von Werkstücken aus Kautschuk bekannt, die in einer Form vulkanisiert, wobei der Kautschuk zuvor mit Mikrowellen erwärmt worden ist. Eine entsprechende Spritzgießvorrichtung ist auch aus der US 7 604 473 B2 bekannt, mit welcher der Werkstoff zunächst gleich auf die für die Vulkanisierung nötige Temperatur erwärmt wird. Die Form, in die der Werkstoff später eingespritzt wird, soll auch prinzipiell ohne weitere Erwärmung auskommen können. Außerdem wird sonst nach dem Stand der Technik herkömmlicherweise ein Kautschuk für einen Spritzgießvorgang an Engstellen im Leitungssystem zur Leitung des Kautschuks durch den Kontakt eines Heizdorns mit dem vorbeifließenden Kautschuk erwärmt.

Aus der DE 24 40 987 A1 und der DE 10 2014 008 603 A1 sind grundsätzlich Verfahren und Vorrichtungen zum Verkürzen der Vulkanisierungszykluszeit bei Spritzguß von Gummimischungen bzw. Mischköpfe mit Wellenemittern bekannt.

Aufgabe der Erfindung ist es, eine besonders effizient und zeitsparend arbeitende Spritzgießvorrichtung bereitzustellen.

Die Aufgabe wird, ausgehend von einer Spritzgießmaschine bzw. einem Spritzgießverfahren der eingangs genannten Art, durch die kennzeichnenden Merkmale des Anspruchs 1 bzw. des Anspruchs 12 gelöst.

Durch die in den abhängigen Ansprüchen genannten Maßnahmen sind vorteilhafte Ausführungen und Weiterbildungen der Erfindung möglich.

Die erfindungsgemäße Spritzgießvorrichtung bzw. das erfindungsgemäße Spritzgießverfahren dienen zunächst der Fertigung eines Spritzgussteils aus einem elastomeren Kunststoff, d.h. es werden z.B. Gummiprofile aus Elastomeren hergestellt. Als Ausgangsmaterial bzw. Werkstoff dient hierzu ein Kautschuk, welcher erst durch Erwärmung eine Vernetzung der inneren Struktur erfährt, und somit zum Elastomer bzw. zum elastomeren Kunststoff wird. Bei diesem Vernetzungsprozess handelt es sich schließlich insbesondere um einen Vulkanisierungsprozess. Statt von einem Werkstoff spricht man bei dem Ausgangsmaterial oft auch von einer Mischung.

Beim Spritzgießen wird der Werkstoff in eine Form, genauer gesagt in eine Kavität im Inneren einer geschlossenen Form gespritzt. Die Form besteht in der Regel aus einer oberen und einer unteren Formplatte, welche im zusammengesetzten Zustand eine oder mehrere Kavitäten ausbilden bzw. dicht umschließen. Die Kavität bildet also eine Ausnehmung zwischen den beiden Formplatten. Ihre Gestalt entspricht exakt der des herzustellenden Spritzlings.

Zur Zuführung des Werkstoffs ist ein Anspritzaggregat vorgesehen, mit dem der Werkstoff unter Druck in die Form bzw. die Kavität gespritzt werden kann.

Mit Hilfe der Erfindung können eine Reihe von Vorteilen gegenüber dem bisherigen Stand der Technik umgesetzt werden:
Erfindungsgemäß ist ein Mikrowellenerhitzer zum Vorwärmen des Werkstoffs mit einem Mikrowellengenerator zur Erzeugung von Mikrowellen und einem Hohlleiter zum Leiten der Mikrowellen vorgesehen. In dem Hohlleiter ist eine Durchflussbuchse als Kanal für den Werkstoff angeordnet. Das Anspritzaggregat ist gemäß der Erfindung mit der Durchflussbuchse verbunden und drückt den Werkstoff durch die Durchflussbuchse hindurch. Der Werkstoff kann durch die Durchflussbuchse und somit durch den Hohlleiter hindurchfließen, ist aber, da die Durchflussbuchse im Hohlleiter angeordnet ist, den Mikrowellen und hierdurch einem Erwärmungsprozess durch die Mikrowellen ausgesetzt. Diese Anordnung übernimmt also gewissermaßen die Funktion eines Durchlauferhitzers. Die Erwärmung durch Mikrowellen ist einstellbar und regelbar; zudem erfordert die Erwärmung durch Mikrowellen deutlich weniger Zeit als die bloße Erwärmung über die Oberfläche einer Durchflussleitung, sodass die Funktionsweise, die der eines Durchlauferhitzers ähneln kann und auch eine schnelle Reaktion auf eine Regelung möglich ist Außerdem wird nur der Werkstoff bzw. die Mischung erwärmt, während die Umgebung nicht erwärmt werden muss, je nach Material. Zudem ist der Aufbau mit Hohlleiter ohnehin so gewählt, dass nach Möglichkeit nur die Durchflussbuchse und das Material, das durch sie hindurchfließt, den Mikrowellen ausgesetzt sind.

Wird der Werkstoff lediglich im Kontakt mit einer Oberfläche erwärmt, so kann ein Nachteil auch darin bestehen, dass sich die Oberfläche durch die Wärmeabgabe selbst abkühlt und den nachfolgenden Werkstoff dann schwächer erwärmt.

Ein Vorteil der Durchflussbuchse kann darin bestehen, dass sie zum Beispiel einen schmalen Durchmesser besitzt, sodass wenig Werkstoff den Mikrowellen ausgesetzt ist und sich daher schneller erwärmen kann.

Die Vernetzungs- und Vulkanisationstemperatur sind in der Regel nicht die gleiche Temperatur. Die Vulkanisationstemperatur entspricht der eingestellten Formtemperatur. Die Vernetzungstemperatur beginnt ab der Temperatur, bei welcher die chemische Reaktion gestartet wird (in der Regel liegt eine sehr lange Vulkanisationszeit vor). Zwischen diesen 2 Temperaturen kann eine relativ große Differenz bestehen, weil die Temperaturüberhöhung bei der Vulkanisationstemperatur mit einer erheblichen Verkürzung der notwendigen Vulkanisationszeit direkt zusammenhängt, um die notwendige Vernetzung eines weitaus überwiegenden Teils des Werkstoffs zu erhalten und so den Spritzling auch wieder entformen zu können. Der deutlich geringere, noch fehlende Anteil an Vulkanisation erfolgt dann in der Regel außerhalb der Form beim Abkühlen des Spritzlings durch Nachvulkanisation aufgrund der zuvor gespeicherten Restwärme aus dem Spritzgießprozess.

Ein weiterer Vorteil, der mit der Verwendung der Durchflussbuchse einhergeht, besteht auch darin, dass der Werkstoff nicht, wie sonst im Stand der Technik üblich, durch Verscherung an Engstellen erwärmt wird; denn durch Verscherungen besteht auch das Risiko, dass längerkettige Polymere im Werkstoff zerreißen. Dieser ungewollte Nebeneffekt des Reißens von Polymerketten ändert nämlich grundsätzlich die mechanischen Eigenschaften des späteren Elastomers, weil nach der Vernetzung kürzere Polymerketten die Basis bilden.

Besonders bevorzugt ist es, den Werkstoff dann, wenn er die Durchflussbuchse passiert, unmittelbar den Mikrowellen auszusetzen, sofern z.B. das Material der Durchflussbuchse durchlässig für Mikrowellen ist. Hierdurch kann in vorteilhafter Weise der Werkstoff deutlich homogener und schneller erwärmt werden, als dies bei einer Kontakterwärmung an zuvor erwärmten Oberflächen der Fall ist. Gleichzeitig bietet eine solche direkte Erwärmung durch Mikrowellen den Vorteil, dass nicht durch den Kontakt die erwärmende Oberfläche wiederum abgekühlt und somit die Erwärmung für das nachfolgende Werkstoffmaterial verringert wird. In beiden Punkten zeichnet sich die Erfindung somit gegenüber der im Stand der Technik herkömmlichen Erwärmungsmethode mit einem Heizdorn aus.

Dennoch ist es auch möglich, eine Ausführungsvariante der Erfindung vorzusehen, bei der wenigstens teilweise das Material, aus dem die Durchflussbuchse besteht, durch die Mikrowellen erwärmt wird. Dann kann die Erwärmung des Werkstoffs zumindest teilweise durch Kontakt mit der erwärmten Oberfläche der Durchflussbuchse erfolgen.

Zum Verteilen des Kunststoffmaterials und Einleitung in die wenigstens eine Kavität an jeweils wenigstens einer bzw. wenigstens zwei unterschiedlichen Stellen der Form ist erfindungsgemäß ein Angussverteiler vorgesehen, welcher an die Durchflussbuchse angeschlossen ist, sodass der Angussverteiler von der Durchflussbuchse mit dem Werkstoff gespeist wird. Der Angussverteiler sorgt dafür, dass der Werkstoff schnell sowie möglichst gleichmäßig und homogen in die Kavität bzw. in die Kavitäten gelangen kann und diese vollständig ausfüllt.

Erfindungsgemäß ist darüber hinaus eine Kontrollvorrichtung, vorgesehen, mit welcher zunächst eine Kontrolle der Temperatur des Werkstoffs möglich ist" indem der Mikrowellenerhitzer durch die Kontrollvorrichtung geregelt wird. Die Kontrollvorrichtung regelt die Werkstofftemperatur durch den Mikrowellenerhitzer auf eine Temperatur, die vorteilhafterweise auch unterhalb der Vulkanisierungstemperatur liegt. Auch wenn der Vernetzungsprozess bereits durch die Erwärmung durch den Mikrowellenerhitzer (z.B. auf die Vernetzungstemperatur) bereits beginnt, ist die Vulkanisationstemperatur damit noch nicht erreicht.Ferner ist vorteilhafterweise eine Heizvorrichtung zum Heizen der Form vorgesehen. Die Heizvorrichtung wird auch durch die Kontrollvorrichtung hinsichtlich ihrer Temperatur eingestellt bzw. geregelt. Die Form wird auf eine Temperatur eingestellt, die höher ist als die Temperatur des Werkstoffs, der in die Form eingespritzt wird. Vorteilhafterweise wird sie auf eine Temperatur eingestellt, die deutlich höher ist als die Vernetzungstemperatur des Werkstoffs. Dadurch, dass der Werkstoff durch den Mikrowellenerhitzer noch nicht auf die für die Vulkanisierung des gesamten Werkstoffs notwendige Temperatur gebracht wird, kann vermieden oder zumindest reduziert werden, dass der Vulkanisierungsprozess bereits vor Erreichen und Ausfüllen der Kavität abläuft. Durch diese Maßnahme kann gemäß der Erfindung auch ein technisches Vorurteil überwunden werden, da im Stand der Technik es bislang eher als vorteilhaft angesehen wurde, den Werkstoff gleich auf die Vulkanisierungstemperatur zu bringen, weil so eine Erwärmung der Form einigermaßen vermieden werden kann. Gemäß der Erfindung wurde jedoch erkannt, dass die Form ohnehin auf eine bestimmte Temperatur gebracht werden sollte, die zumindest ähnlich zur Temperatur des Werkstoffs bzw. ähnlich zur Vernetzungstemperatur, besonders bevorzugt aber deutlich darüber liegt, weil sonst der Werkstoff gleich bei Kontakt mit der Form wieder heruntergekühlt wird, was gegebenenfalls sogar die Vulkanisierung unterbrechen kann. Deswegen ist es vorteilhaft, wenn die Mischung bzw. der Werkstoff, bevor er in die Form eingespritzt worden ist, noch nicht auf die Vulkanisierungstemperatur gebracht worden ist, damit erst dann, wenn sich der Werkstoff in der Kavität befindet, der letzte Schritt zur Erhöhung des Vernetzungsgrads bis zur Vulkanisierung stattfinden kann. Liegt die Temperatur der Form aber über, insbesondere deutlich über der Temperatur des Werkstoffs, besonders bevorzugt über der Vernetzungs- bzw. Vulkanisierungstemperatur, so erhält der Werkstoff noch die für die Vernetzung bzw. Vulkanisierung notwendige Wärmemenge über die Form und kann vollständig ein Elastomer bilden.

Da die Werkstücke aus einem Elastomer bzw. Gummi, also aus einem thermischen Isolator bestehen, leiten sie Wärme vergleichsweise schlecht. Daher ist es, vor allem bei Kavitäten mit großen Hohlräumen zur Fertigung vergleichsweise dicker bzw. dickwandiger Spritzlinge schwieriger bzw. zeitaufwändiger, eine homogene Vernetzung herzustellen, wenn ein vergleichsweise kalter Werkstoff nur über eine Oberfläche der Form erwärmt wird, weil die Wärme schlechter ins Innere der Kavität vordringen kann. Deshalb ist es vorteilhaft, wenn der Werkstoff bereits durch den Mikrowellenerhitzer auf eine Temperatur unterhalb der Vulkanisierungstemperatur gebracht worden ist, wenn er in die Form eingespritzt wird. Dies trifft insbesondere auf die von der Heizquelle (Kavitätsoberfläche) am weitesten entfernten Werkstoffbereiche zu.

Die Form wird erst gar nicht den Mikrowellen unmittelbar ausgesetzt. Stattdessen kann sie separat durch eine Heizvorrichtung erwärmt werden. Der Werkstoff allerdings, der in die Form bzw. in die Kavität gedrückt wird, ist bereits vorgewärmt. Der Werkstoff ist so erhitzt worden, dass sie eine ähnliche, aber etwas niedrigere Temperatur als die Vulkanisierungstemperatur besitzt, bevor er in die Kavität bzw. die Form eingespritzt wird. Dünne bzw. enge Stellen der Kavität stellen in der Regel einen besonders kritischen Bereich dar; denn das Werkstück weist hier z.B. filigranere Strukturen auf, die sehr genau gefertigt sein müssen. Gleichzeitig können diese Bereiche gerade deshalb, weil sie sehr schmal ausgebildet sind, rasch in Kontakt mit einer kälteren Oberfläche auskühlen, sodass der Vernetzungsprozess dort gestört werden kann. Diese generell existierende Schwierigkeit kann durch die Erfindung überwunden werden.

Dadurch kann auch der gesamte Spritzgießprozess beschleunigt werden, weil durch den Mikrowellenerhitzer bereits eine Vorerwärmung des Werkstoffs erfolgt, d.h. die Erwärmung erfolgt in Etappen und insgesamt nicht erst in der Form, was auch so bereits viel Zeit in Anspruch nehmen würde. Durch die Ausnutzung des Prinzips ähnlich einem Durchlauferhitzer wird für das Vorwärmen keine oder nur wenig zusätzliche Zeit benötigt. Zudem kann der Werkstoff deutlich gleichmäßiger erwärmt werden als bei einer Kontakterwärmung in der Kavität. Eine Verkürzung der Gesamtzykluszeit ist daher möglich. Damit können also auch eine Reduzierung der Stückkosten und eine Erhöhung der möglichen Ausbringung pro Zeiteinheit einhergehen.

Durch die Erfindung kann somit in vorteilhafter Weise ein in sich geschlossenes, modulares System bereitgestellt werden, das direkt regelbar ist.

Bei einer Ausführungsform der Erfindung kann der Angussverteiler unmittelbar zwischen die Durchflussbuchse bzw. den Hohlleiter einerseits und die Kavität andererseits geschaltet sein, sodass unter anderem der Werkstoff nach der Erwärmung kurze Wege zurücklegen muss, bis er in der Kavität angekommen ist und man so davon ausgehen kann, dass der Werkstoff noch mit einer ähnlichen oder möglichst der gleichen Temperatur in der Kavität ankommt, auf welche er in der Durchflussbuchse erwärmt wurde. Dies vereinfacht auch die Regelung des Systems.

Im Hohlleiter kann bei einem Ausführungsbeispiel auf der dem Mikrowellengenerator gegenüberliegenden Seite ein Reflektor, insbesondere ein einstellbarer Reflektor, angeordnet sein. Dadurch kann das Energiemaximum genau auf das Material in der Durchflussbuchse eingestellt werden.

Je nach Ausführungsvariante der Erfindung kann die Form unterschiedlich ausgebildet sein. Denkbar ist zum Beispiel, dass die obere Formplatte beweglich und/oder die untere Formplatte starr ist. Die Form besteht grundsätzlich aus wenigstens zwei Teilen, damit sie geöffnet und das Werkstück, der Spritzling, entnommen werden kann. Eine Formplatte kann daher beweglich, die andere starr / feststehend ausgebildet sein.

Wie bereits zuvor dargestellt, ist es vorteilhaft, wenn die Durchflussbuchse aus einem für Mikrowellen durchlässigen Material besteht, damit der Werkstoff direkt den Mikrowellen ausgesetzt ist und erwärmt wird. Es ist auch denkbar, dass die Durchflussbuchse teildurchlässig ist und zum Teil durch die Mikrowellen ebenfalls erwärmt wird. Die Durchflussbuchse kann grundsätzlich zum Beispiel aus Glas, Kunststoff oder einer Keramik gefertigt sein. Denkbar sind auch Verbundwerkstoffe, um die Eigenschaften der Durchflussbuchse möglichst präzise gestalten zu können. Auch ein solcher Verbundwerkstoff kann Glas, Kunststoff bzw. Keramik enthalten. Die Durchflussbuchse kann auch aus zwei Materialien in vorteilhafter Weise gefertigt werden, indem diese durch eine Lötstelle verbunden sind.

Bei einer Weiterbildung der Erfindung kann die Kontrollvorrichtung mit Temperatursensoren verbunden sein, um Daten für die Regelung zu erhalten. Auch der Angussverteiler kann entsprechend einen Temperatursensor aufweisen, weil der Werkstoff unmittelbar bevor er die Kavität erreicht, durch den Angussverteiler fließt, sodass damit Rückschlüsse auf die Werkstofftemperatur gezogen werden können. Die Temperatursensoren können aber auch in den jeweiligen Formplatten angeordnet sein, um die Werkstofftemperatur in den Kanälen bzw. in der Kavität zu messen.

Die Kontrollvorrichtung kann bei einem Ausführungsbeispiel entsprechend mit dem Mikrowellenerhitzer verbunden sein, um den Grad der Erhitzung des Werkstoffs einzustellen, weil der Werkstoff unmittelbar durch die Mikrowellen erhitzt wird und dies durch die Regelung der Intensität direkt beeinflusst und eingestellt werden kann.

Bei vorteilhaften Ausführungsvarianten der Erfindung können der Angussverteiler und/oder der Hohlleiter in die Form, insbesondere in die obere Formplatte integriert sein. Auf diese Weise kann eine kompakte Form mit kurzen Durchflusswegen realisiert werden.

Der Angussverteiler kann die Schnittstelle zwischen Hohlleiter und/oder Durchflussbuchse einerseits und der Form andererseits bilden, um vorteilhafterweise bei dieser Ausführungsform die erhitzte Mischung nach der Erwärmung gleich zu verteilen und in die Kavität(en) einzubringen.

Ferner kann bei einer Ausführungsbeispiel der Angussverteiler als Kaltverteiler ausgebildet sein, dessen Temperatur im Betrieb unterhalb der Temperatur der Form bleibt und/oder welcher allenfalls temperiert ausgebildet ist. In der Regel ist der Kaltverteiler aber nur im Verhältnis zum Werkstoff kühler, dessen Temperatur typischerweise bei über 100°C, z.B. bei ca. 120°C liegen kann, während die Temperatur der Form durchaus bei 180°C liegen kann. Der Kaltverteiler kann z.B. eine Temperatur von ca. 60°C - 80°C aufweisen. Die niedrigere Temperatur des Kaltverteilers spielt gegebenenfalls keine allzu große Rolle, vor allem, wenn der Kaltverteiler klein ausgebildet ist und tatsächlich die Schnittstelle zwischen Durchflussbuchse und Kavität(en) bildet. Die Temperaturregelung durch die Kontrollvorrichtung kann dadurch vereinfacht werden, weil die Regelung nur an zwei Stellen, nämlich dem Mikrowellenerhitzer und der Form erfolgen muss. Gegebenenfalls wird der Angussverteiler bzw. der Kaltverteiler nur über die Kontrollvorrichtung temperiert. Insbesondere sollte der Werkstoff seine Fließfähigkeit auf dem Weg zur Form nicht verlieren.

Dementsprechend lassen sich die oben genannten Vorteile durch ein erfindungsgemäßen Spritzgießverfahren erzielen, das zur Fertigung eines Spritzgussteils aus einem elastomeren Kunststoff dient und folgende Verfahrensschritte umfasst:
- Bereitstellen eines Kautschuks als Werkstoff,
- Bereitstellen einer Form mit einer oberen Formplatte und einer unteren Formplatte, welche im zusammengesetzten Zustand wenigstens eine Kavität ausbilden, in welche der Werkstoff einbringbar ist,
- Bereitstellen eines Anspritzaggregats zur Zuführung des Werkstoffs,
- Bereitstellen eines Mikrowellenerhitzers zum Vorwärmen des Werkstoffs mit einem Mikrowellengenerator zur Erzeugung von Mikrowellen und einem Hohlleiter zum Leiten der Mikrowellen,
- wobei eine Durchflussbuchse im Hohlleiter bereitgestellt bzw. angeordnet wird, welche mit dem Anspritzaggregat verbunden ist und einen Kanal für den Werkstoff ausbildet.

Ein solches Verfahren zeichnet sich dadurch aus, dass ein Angussverteiler zum Verteilen des Kunststoffmaterials und Einleitung in die wenigstens eine Kavität an jeweils wenigstens zwei unterschiedlichen Stellen der Form bereitgestellt wird, welcher an die Durchflussbuchse angeschlossen ist, sodass der Angussverteiler von der Durchflussbuchse mit dem Werkstoff gespeist wird. Ferner erfolgt ein Vorwärmen des Werkstoffs beim Durchfluss durch die Durchflussbuchse durch den Mikrowellenerhitzer auf eine Temperatur unterhalb der Formtemperatur, also unterhalb Vulkanisierungstemperatur. Der Werkstoff wird durch den Angussverteiler zur Einleitung in die wenigstens eine Kavität verteilt. Schließlich erfolgt ein Erhitzen der Form auf eine Temperatur gleich oder über der Vernetzungs- bzw. Vulkanisierungstemperatur.

Ein solches Verfahren gemäß der Erfindung ermöglicht es also, die Mischung kontrollierbar direkt und zuverlässig vorzuwärmen, ohne einen Vernetzungs- / Vulkanisierungsprozess bereits einzuleiten. Mechanische Schäden am Werkstoff, wie das Zerreißen von Polymerketten, können vermieden werden, weil keine Scherungen an Engstellen der Kanäle zur Erwärmung prinzipiell notwendig sind. Dadurch kann auch der Energiebedarf der Spritzgießvorrichtung verringert werden, weil die Mischung nicht mit derart hohen Drücken beaufschlagt werden muss. Die Vernetzung bzw. Vulkanisierung kann aber sehr rasch erfolgen, wobei schließlich die Erhitzung der Form den noch fehlenden Rest der Wärme zuführt, um den Vernetzungs- bzw. Vulkanisierungsvorgang einzuleiten.

Bei Ausführungsformen des Verfahrens gemäß der Erfindung können somit vorteilhafterweise Spritzgießvorrichtungen nach einem der Ausführungsbeispiele der Erfindung eingesetzt werden.

### Ausführungsbeispiel:

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Fig. 1:: eine schematische Darstellung einer Spritzgießvorrichtung bzw. eines Spritzgießverfahrens gem. der Erfindung,
- Fig. 2, 3:: die Anbringung von Temperatursensoren am Angussverteiler und im Bereich der Kavität, sowie
- Fig. 4:: einen weiteren Ausschnitt der Spritzgießvorrichtung gem. der Erfindung.

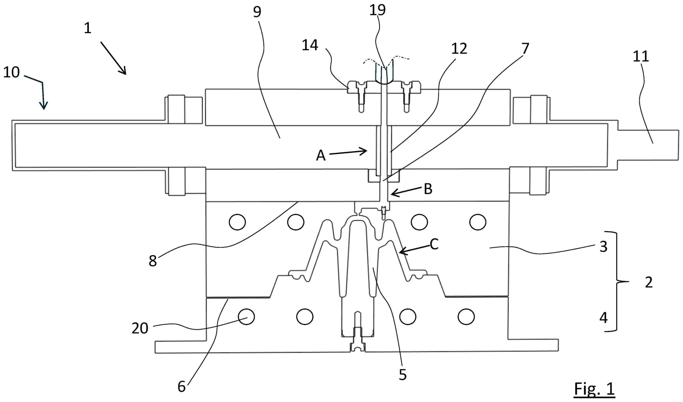

Figur 1 zeigt einen schematischen Schnitt durch einen Teil der Spritzgießvorrichtung 1 gem. der Erfindung. Sie umfasst zunächst eine Form 2 mit einer oberen Formplatte 3 und einer unteren Formplatte 4, wobei die obere Formplatte 3 beweglich und die untere Formplatte 4 starr ausgebildet ist. Zum Öffnen der Form 2 wird die obere Formplatte 3 bewegt. Beide Formplatten 3, 4 umschließen eine Kavität 5, welche räumlich die Form des Spritzlings annimmt. Die beiden Formplatten 3, 4, welche im geschlossenen Zustand aufeinander aufliegen, sind durch die Kavitäten-Trennebene 6 voneinander getrennt. Oberhalb der beweglichen Formplatte 3 ist der Angussverteiler 7 angeordnet, der auf der oberen Formplatte 3 aufsitzt und durch eine Trennebene 8 von der oberen Formplatte 3 getrennt ist. In den Angussverteiler 7 ist der Hohlleiter 9 des Mikrowellenerhitzers 10 integriert. Die obere Formplatte 3, der Hohlleiter 9 und der Angussverteiler 7 können also eine kompakte Einheit bilden und auch zusammen bewegt werden. In Figur 1 ist auf der rechten Seite als Abschluss des Hohlleiters 9 ein Reflektor 11 angeordnet. Demgegenüber ist auf der linken Seite in Figur 1 am Hohlleiter 9 ein (nicht dargestellter) Mikrowellengenerator angeordnet. Der Reflektor 11 reflektiert also die einfallenden Wellen.

Der Hohlleiter 9 wiederum wird durchquert von einer Durchflussbuchse 12, die senkrecht zur Längsachse des Hohlleiters 9 verläuft. Die Wellen im Hohlleiter 12 treffen also senkrecht auf die Durchflussbuchse 12. Die Durchflussbuchse 12 ist als Rohr ausgebildet, welches von dem Werkstoff / der Mischung durchflossen wird, da die Durchflussbuchse 12 unmittelbar über den Anschluss 14 an ein Anspritzaggregat 19 (in Figur 1 nur schematisch dargestellt) angeschlossen ist.

Somit wird der Werkstoff vom Anspritzaggregat 19 durch die Durchflussbuchse 12 geleitet, die sich im Hohlleiter 9 befindet. Dabei wird der Werkstoff beim Passieren der Durchflussbuchse 12 permanent mit Mikrowellen im Hohlleiter 9 bestrahlt und erwärmt. Das Maximum der Energiedichte wird durch den Reflektor 11 auf das Material in der Durchflussbuchse 12 verschoben. Die Mikrowelleneinstrahlung ist so eingestellt, dass der Werkstoff fließfähig, aber unterhalb der Vulkanisierungstemperatur bleibt, z.B. im Bereich von ca. 120°C.

Im Anschluss an die Durchflussbuchse 12 gelangt der Werkstoff in den Angussverteiler 7 und wird an mehreren Stellen in die Kavität 5 eingespritzt. Der Werkstoff kommt dabei auch mit den Oberflächen der Formplatten 3, 4 im Bereich der Kavität 5 im Inneren der Form 2 in Berührung. Da die Form 2 zuvor über eine Heizvorrichtung 20 auf eine Temperatur erwärmt worden ist, welche deutlich höher als die des Werkstoffs ist, kühlt sich der Werkstoff auch nicht über diesen Kontakt ab, sondern erwärmt sich weiter. Im Gegenteil wird die Form 2 auch noch auf eine deutlich höhere Temperatur gebracht, sodass der Werkstoff, der bereits auf eine Temperatur in der Nähe der Vernetzungstemperatur gebracht wurde, die Vernetzungstemperatur nun erreicht, sodass der Werkstoff (Kautschuk) vulkanisieren kann und schließlich ein Elastomer ausbildet, ohne dass der bereits vorgewärmte Werkstoff bzw. die bereits vorgewärmte Mischung lange aufgeheizt werden muss und eine große Wärmemenge erst in den zentralen Bereichen der Kavität durch den Werkstoff hindurch ankommen muss. Hierdurch kann der Spritzgießprozess deutlich beschleunigt werden.

Ein derartiges Spritzgießverfahren umfasst also unter anderem die Verfahrensschritte:
- Vorwärmen A des Werkstoffs mittels Mikrowellenerhitzer 10
- Verteilen B des Werkstoffs durch den Angussverteiler 7 in die Kavität 5
- Erhitzen C der Form 2 bzw. Beibehalten (C) der Formtemperatur auf eine(r) Temperatur deutlich über der des eingespritzten Werkstoffs und somit auch über der Vulkanisierungstemperatur (z.B. 180°C).

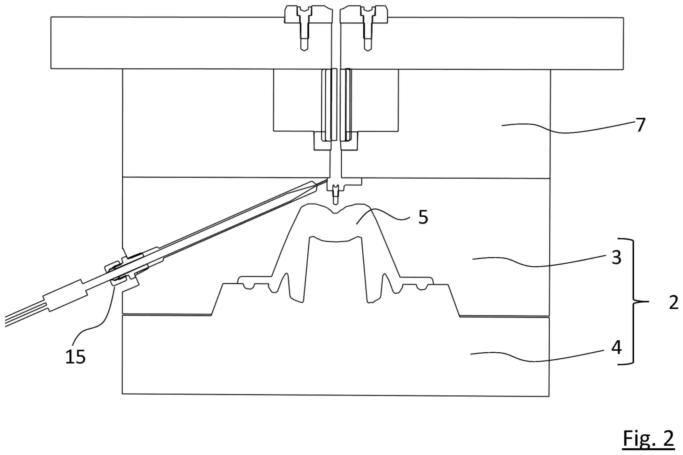

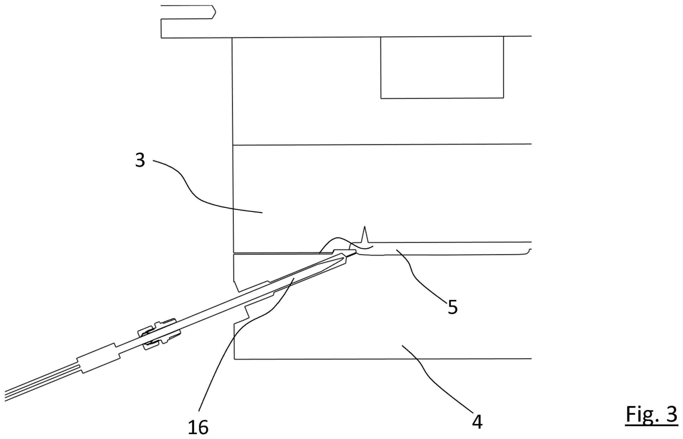

Die Figuren 2 und 3 zeigen die Anbringung von Temperatursensoren 15, 16: Beide Temperatursensoren 15, 16 werden hier über die Formplatten 3, 4 installiert. Der Temperatursensor 15, der die Werkstofftemperatur im Bereich des Angussverteilers 7 misst, wird hier über die obere Formplatte 3 zum Kanal gebracht (vgl. Figur 2).

Zum Messen der Temperatur des Werkstoffs in der Kavität 5 wird der Temperatursensor 16 über die untere, feste Formplatte 4 zur Kavität 5 geführt (vgl. Figur 3).

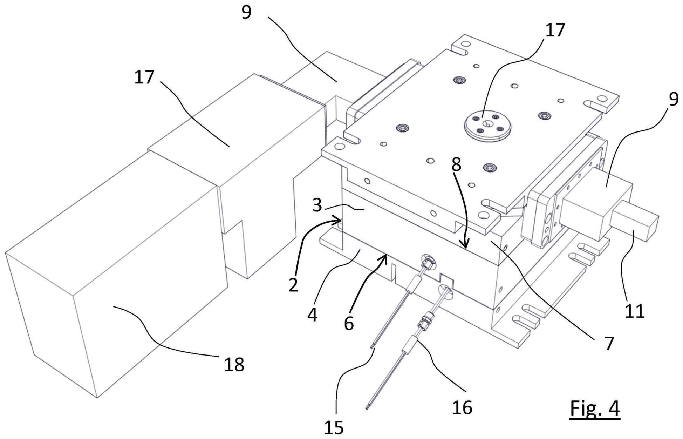

Der Aufbau der Spritzgießvorrichtung 1 ist in Figur 4 dargestellt: Auch hier besteht die Form 2 aus einer oberen Formplatte 3 und einer unteren Formplatte 4. In die obere Formplatte 3 ist der Temperatursensor 15 zur Messung der Werkstofftemperatur in den Kanälen des Angussverteilers 7 eingebracht, in die untere Formplatte 4 der Temperatursensor 16, mit dem die Temperatur des Werkstoffs in der Kavität gemessen wird. Die Formplatten 3, 4 sind durch die Kavitätentrennebene 6 voneinander getrennt. Eine weitere sichtbare Trennebene 8 trennt die obere Formplatte 3 vom Angussverteiler 7, der vom Hohlleiter 9 durchsetzt wird. Am Ende des Hohlleiters 9 ist der Reflektor 11 angeordnet und zu sehen. Gegenüber, also am anderen Ende des Hohlleiters 9, ist der Mikrowellengenerator 17 angeordnet.

Dargestellt ist außerdem die Kontrollvorrichtung 18, welche die Temperaturmessdaten der beiden Sensoren 15, 16 erhält und welche mit dem Mikrowellengenerator 17 verbunden ist und so die Intensität der Mikrowellenstrahlung regelt.

Die Spritzgießvorrichtung bzw. das Spritzgießverfahren gemäß der Erfindung ermöglichen somit nicht nur einen effizienten und zeitsparenden Ablauf der Fertigung, sondern sie ermöglichen auch eine präzise Fertigung der Spritzlinge, selbst wenn diese besonders filigrane Strukturen aufweisen. Außerdem wird der Vernetzungsprozess zur Ausbildung des Elastomers verbessert, sodass eine hohe Qualität mit definierten Eigenschaften des Gummimaterials ermöglicht wird.

### Bezugszeichenliste:

- 1: Spritzgießvorrichtung
- 2: Form
- 3: obere Formplatte
- 4: untere Formplatte
- 5: Kavität
- 6: Kavitätentrennebene
- 7: Angussverteiler
- 8: Trennebene obere Formplatte - Angussverteiler
- 9: Hohlleiter
- 10: Mikrowellenerhitzer
- 11: Reflektor
- 12: Durchflussbuchse

- 14: Anschluss an Anspritzaggregat.
- 15: Temperatursensor für Angussverteiler
- 16: Temperatursensor für Kavität
- 17: Mikrowellengenerator
- 18: Kontrollvorrichtung
- 19: Anspritzaggregat
- 20: Heizvorrichtung
- A: Vorwärmen des Werkstoffs durch den Mikrowellenerhitzer
- B: Verteilen des Werkstoffs durch den Angussverteiler in die Kavität
- C: Erhitzen der Form bis zur Vulkanisierungstemperatur

## Patentansprüche

1. Spritzgießvorrichtung (1) zur Durchführung eines Spritzgießprozesses mit einem Kautschuk als Werkstoff und zum Bewirken einer Vernetzung zur Herstellung eines elastomeren Kunststoffs durch Erwärmung, insbesondere zur Vulkanisation, und zur Fertigung eines Spritzgussteils aus dem erhaltenen elastomeren Kunststoff, umfassend:
a. eine Form (2) mit einer oberen Formplatte (3) und einer unteren Formplatte (4), welche im zusammengesetzten Zustand wenigstens eine Kavität (5) ausbilden, in welche der Werkstoff einbringbar ist,
b. ein Anspritzaggregat (19) zur Zuführung des Werkstoffs,
c. ein Mikrowellenerhitzer (10) zum Vorwärmen des Werkstoffs mit einem Mikrowellengenerator (17) zur Erzeugung von Mikrowellen und einem Hohlleiter (9) zum Leiten der Mikrowellen,
d. wobei eine Durchflussbuchse (12) im Hohlleiter (9) angeordnet ist, welche mit dem Anspritzaggregat (19) verbunden ist und einen Kanal für den Werkstoff ausbildet, sodass der Werkstoff aus dem Anspritzaggregat (19) durch die Durchflussbuchse (12) und somit durch den Hohlleiter (9) hindurchfließen kann, um durch die Mikrowellen vorgewärmt zu werden,
**dadurch gekennzeichnet, dass**
ein Angussverteiler (7) zum Verteilen des Kunststoffmaterials und Einleitung in die wenigstens eine Kavität (5) an jeweils wenigstens einer, insbesondere wenigstens zwei unterschiedlichen Stellen der Form (2) vorhanden ist,
welcher an die Durchflussbuchse (12) angeschlossen ist, sodass der Angussverteiler (7) von der Durchflussbuchse (12) mit dem Werkstoff gespeist wird,
wobei eine Heizvorrichtung (20) zum Heizen der Form (2) vorgesehen ist, und
wobei eine Kontrollvorrichtung (18) zur Kontrolle des Mikrowellenerhitzers (10) und/oder der Heizvorrichtung (20) der Form (2) und/oder der Temperatur des Werkstoffs vorgesehen ist, welche dazu ausgebildet ist, den Werkstoff durch den Mikrowellenerhitzer (10) auf eine Temperatur unterhalb der Temperatur der Form (2), insbesondere unterhalb der Vernetzungs- und/oder Vulkanisierungstemperatur aufzuheizen..

2. Spritzgießvorrichtung (1) nach Anspruch 1, **dadurch gekennzeichnet, dass** der Angussverteiler (7) unmittelbar zwischen die Durchflussbuchse (12) und/oder den Hohlleiter (9) einerseits und die wenigstens eine Kavität (5) andererseits geschaltet ist.

3. Spritzgießvorrichtung (1) nach einem der vorgenannten Ansprüche, **dadurch gekennzeichnet, dass** im Hohlleiter (9) auf der dem Mikrowellengenerator (17) gegenüberliegenden Seite ein Reflektor (11), insbesondere ein einstellbarer Reflektor (11), angeordnet ist.

4. Spritzgießvorrichtung (1) nach einem der vorgenannten Ansprüche, **dadurch gekennzeichnet, dass**
a. die obere Formplatte (3) beweglich und die untere Formplatte (4) starr ist oder
b. die obere Formplatte starr und die untere Formplatte beweglich ist.

5. Spritzgießvorrichtung (1) nach einem der vorgenannten Ansprüche, **dadurch gekennzeichnet, dass** die Durchflussbuchse (12) aus einem für Mikrowellen wenigstens teilweise, insbesondere vollständig durchlässigen Material ausgebildet ist.

6. Spritzgießvorrichtung (1) nach einem der vorgenannten Ansprüche, **dadurch gekennzeichnet, dass** die Durchflussbuchse (12):
a. aus Glas, Kunststoff oder Keramik oder
b. aus einem Verbundwerkstoff aus wenigstens zwei der Materialien Glas, Kunststoff und Keramik
c. aus zwei unterschiedlichen Materialen, die durch eine Lötstelle verbunden sind,
gefertigt ist.

7. Spritzgießvorrichtung (1) nach einem der vorgenannten Ansprüche, **dadurch gekennzeichnet, dass** wenigstens ein Temperatursensor (15, 16) zur Messung der Werkstofftemperatur und/oder der Temperatur der Form (2) und/oder der Temperatur des Angussverteilers (7) vorgesehen ist/sind, der/die mit der Kontrollvorrichtung (18) verbunden ist/sind.

8. Spritzgießvorrichtung (1) nach einem der vorgenannten Ansprüche, **dadurch gekennzeichnet, dass** die Kontrollvorrichtung (18) mit dem Mikrowellenerhitzer (10) verbunden ist, um den Grad der Erhitzung des Werkstoffs einzustellen.

9. Spritzgießvorrichtung (1) nach einem der vorgenannten Ansprüche, **dadurch gekennzeichnet, dass** der Angussverteiler (7) und/oder der Hohlleiter (9) in die Form (2), insbesondere in die obere Formplatte (3) integriert ist/sind.

10. Spritzgießvorrichtung (1) nach einem der vorgenannten Ansprüche, **dadurch gekennzeichnet, dass** der Angussverteiler (7) die Schnittstelle zwischen Hohlleiter (9) und/oder Durchflussbuchse (12) einerseits und Form (2) andererseits bildet.

11. Spritzgießvorrichtung (1) nach einem der vorgenannten Ansprüche, **dadurch gekennzeichnet, dass** die Kontrollvorrichtung (18) zur Kontrolle der Temperatur des Angussverteilers (7) ausgebildet ist und/oder dass der Angussverteiler (7) als Kaltverteiler ausgebildet ist, dessen Temperatur im Betrieb unterhalb der Temperatur der Form (2) bleibt und/oder welcher temperiert, insbesondere durch die Kontrollvorrichtung (18), ausgebildet ist, um den Kautschuk am Fließen zu halten.

12. Spritzgießverfahren zur Fertigung eines Spritzgussteils aus einem elastomeren Kunststoff, umfassend folgende Verfahrensschritte:
a. Bereitstellen eines Kautschuks als Werkstoff,
b. Bereitstellen einer Form (2) mit einer oberen Formplatte (3) und einer unteren Formplatte (4), welche im zusammengesetzten Zustand wenigstens eine Kavität (5) ausbilden, in welche der Werkstoff einbringbar ist,
c. Bereitstellen eines Anspritzaggregats (19) zur Zuführung des Werkstoffs,
d. Bereitstellen eines Mikrowellenerhitzers (10) zum Vorwärmen des Werkstoffs mit einem Mikrowellengenerator (17) zur Erzeugung von Mikrowellen und einem Hohlleiter(9) zum Leiten der Mikrowellen,
e. wobei eine Durchflussbuchse (12) im Hohlleiter (9) bereitgestellt und/oder angeordnet wird, welche mit dem Anspritzaggregat (19) verbunden ist und einen Kanal für den Werkstoff ausbildet,
**gekennzeichnet durch**:
f. Bereitstellen eines Angussverteilers (7) zum Verteilen des Kunststoffmaterials und Einleitung in die wenigstens eine Kavität (5) an jeweils wenigstens zwei unterschiedlichen Stellen der Form (2), welcher an die Durchflussbuchse (12) angeschlossen ist, sodass der Angussverteiler (7) von der Durchflussbuchse (12) mit dem Werkstoff gespeist wird,
g. Vorwärmen (A) des Werkstoffs durch den Mikrowellenerhitzer (10) beim Durchfluss durch die Durchflussbuchse (12) auf eine Temperatur unterhalb der Temperatur der Form (2), insbesondere unterhalb Vernetzungs- und/oder Vulkanisierungstemperatur,
h. Verteilen (B) des Werkstoffs durch den Angussverteiler (7) zur Einleitung in die wenigstens eine Kavität (5),
i. Erhitzen (C) der Form auf eine Temperatur und/oder Beibehalten (C) der Temperatur der Form gleich oder über der Temperatur des Werkstoffs, insbesondere gleich oder über der Vernetzungs- und/oder Vulkanisierungstemperatur.

13. Spritzgießverfahren nach Anspruch 12, **dadurch gekennzeichnet, dass** eine Spritzgießvorrichtung (1) nach einem der Ansprüche 1-11 zur Durchführung der Verfahrensschritte verwendet wird.
